# EUROPEAN PATENT APPLICATION

(11) **EP 1 235 163 A2**
(43) Date of publication of application: **28.08.2002**
(21) Application number: 02251039.0
(22) Date of filing: 15.02.2002
(51) Int. Cl.: G06F 17/30, G06F 17/21

(54) **Electronic design record book**

(30) Priority: 23.02.2001 US 790889
(71) Applicant: GENERAL ELECTRIC COMPANY, Schenectady, NY 12345 (US)
(72) Inventor: Fogarty, James Michael, Schenectady, New York 12309 (US)
(74) Representative: Goode, Ian Roy

(57) **Abstract**

A method and system for an electronic Design Record Book (e-DRB) is disclosed. Software modules (167) interface with a product data management tool (153) to electronically store and retrieve documents. The documents may relate to engineering design information throughout a product's life cycle. Documents are stored in articles, with which metadata and attributes are associated. The articles may be checked out by a user (161) for editing, and checked back in for other users (161) to view. A reviewer may be required to approve the edits made to an article. An export control flag is used to prohibit unauthorized exportation of sensitive information (187). Archive records of each edit are maintained. The e-DRB provides search capability (183) based on metadata information. The e-DRB may be accessed via a network (159) such as the Internet.

## Description

The present invention relates generally to engineering design record management. More particularly, the invention relates to a method and system that electronically stores and retrieves documents and information related to engineering design.

Engineering information is created throughout the engineering design cycle. From the point of first concept until the retirement of the product after its useful life, the product will be designed, analyzed, tested, refurbished, reanalyzed and retested. Each of these activities may result in a new or revised set of drawings, specifications and other information. Many times this additional information documents the process by which the ultimate design concept on the drawings was achieved. The drawings may document how the product is constructed, but it is often the additional information that explains why the product was constructed that way.

Previous software applications have provided limited functionality to track, store, and maintain design records. For instance both the Windows 95 and Macintosh operating systems include means to navigate through a directory structure and to search by file content or file name. In the Macintosh operating system it is also possible to append comments to files and directories. Known computer file systems have also allowed one to restrict access to files according to a hierarchy of privileges assigned to each person. In such systems, the owner of the file is generally the only one who can change or delete it while others have read-only access. However, these systems generally do not store documents in an ISO-9001 compliant system.

In general, many individuals collaborate and work together during design cycles to engineer a product. Some individuals often must get approval before finalizing an update to a document or a revised drawing. Thus a method and system that allows a user to review and approve a submitted document would be useful. In addition, other individuals often need to be able to at least view each other's work, even if not for the purposes of editing or approving it. Thus, an efficient system that provides quick access to documents for read-only purposes would be useful.

Often, in large design groups, some employees are not United States citizens. Export Control Regulations issued by the U.S. Department of Commerce (DOC) require that certain technical information cannot be disclosed to foreign nationals, based on the specific information and the nationality of the recipient or the country to which the information will be sent. Existing file servers do not explicitly restrict access to information according to the DOC regulations. Thus, it would be useful for a system to restrict access to information based on the DOC regulations.

The present invention provides, in a first aspect, an electronic design record book (e-DRB). There is a file server, a database for storing metadata and hierarchy information, a computer program for sending and requesting documents to and from the file server, and a web server. The web server comprises a processor, a volatile memory and a non-volatile memory. In the non-volatile memory are stored computer readable instructions. When the processor executes the computer readable instructions, the server performs a set of steps. The e-DRB receives a file submitted by a first user, and associates metadata with the received file. The e-DRB organizes the received file into a hierarchical data structure. The e-DRB presents the received file to one of the first user and a second user.

In a second aspect of the invention, there is an electronic record comprising a pointer to a data file and metadata comprising author information, revision information, and export control information.

In a third aspect of the invention, there is a method of maintaining revisable records and tracking changes to the records. A file submitted by a first user is received. Metadata is associated with the received file. The received file is organized in a hierarchical data structure. The received file is presented to either the first user or a second user.

In a fourth aspect of the invention, there is a document management system for receiving, storing and tracking engineering design documents. Each document comprises metadata and is positioned in a hierarchical data structure. There is a file server for storing documents. There is a database operatively coupled to the file server for storing metadata information and hierarchy information associated with each document. There is a data management tool operatively coupled to the file server and the database for receiving and processing documents and tracking revisions made to the documents. There is a user interface comprising a computer for enabling a user to review, create, or revise documents in the data management tool. There is a software module coupled to the data management tool comprising user criteria and document access criteria.

In a fifth aspect of the invention, there is a process of managing the receiving, storing and tracking of engineering design documents comprising metadata information. The first step of the process is storing documents in a file server. The second step is storing metadata information associated with each document in a database. The third step is storing hierarchy information associated with each document in the database. The fourth step is receiving, processing, and tracking revisions to the documents in a data management tool operatively coupled to the file server and the database. The fifth step is submitting new documents through a user interface coupled to the data management tool. The sixth step is processing user criteria and document metadata information to enable or prevent access to any document.

In a sixth aspect of the invention, there is a method of using a document management system. The first step of the method is submitting a new document to an electronic design record book (e-DRB) through a user interface. Each document is associated with metadata. The second step is checking out a previously submitted document from the e-DRB. The third step is checking in the document checked out in the previous step. The fourth step is reviewing a submitted document for acceptance into the e-DRB. The fifth step is prohibiting access by a first user to a checked in document that has not been accepted.

In some embodiments, the documents may be searched based on metadata associated with each document.

In other embodiments, an export control flag is used to restrict access to specified documents by a predetermined set of users.

In still other embodiments, metadata may include user-defined attributes.

In yet still other embodiments, a submitted document may be reviewed before being accepted by the e-DRB.

Embodiments of the invention will now be described in greater detail, by way of example, with reference to the accompanying drawings, in which:
Figure 1A shows a block diagram of an embodiment of the invention.
Figure 1B shows a block diagram of a server configured according to an embodiment of the invention.
Figure 1C shows a block diagram of software modules used in an embodiment of the invention.
Figure 2A shows a hierarchy of an embodiment of the invention.
Figure 2B shows a block diagram of an article in an embodiment of the invention.
Figure 3 shows a screenshot of a User Menu.
Figure 4 shows a screenshot of an e-DRB Volumes selection screen.
Figure 5 shows a screenshot of a DRB Navigator screen.
Figure 6 shows a screenshot of an eDRB Navigator after a user has expanded a book.
Figure 7 shows a screenshot of a DRB Navigator screen after a user has navigated to a level in a hierarchy.
Figure 8 shows a screenshot of a Search screen.
Figure 9 shows a screenshot of a Search Results screen.
Figure 10 shows a screenshot of a Checkout screen.
Figure 11 shows a screenshot of a Check-in screen.
Figure 12 shows a screenshot of an Upload screen.
Figure 13 shows a screenshot of a Articles for Review screen.
Figure 14 shows a screenshot of a Review Article screen.
Figure 15 shows a screenshot of a Review Results screen.
Figure 16 shows a screenshot of an Add Article screen.
Figure 17 shows a screenshot of a View Article screen.
Figure 18 shows a screenshot of a View Article screen where the user is unauthorized to view the article.
Figure 19 shows a screenshot of an Update Article Heading screen.
Figure 20 shows a screenshot of an Edit Article Attributes screen.

An electronic Design Record Book (e-DRB) that serves as a repository for design information regarding an article of manufacture or process is disclosed.

Each e-DRB allows a group of users to easily manage information relating to a product or process by storing files in a logical hierarchical manner and associating metadata information with each file. Using the e-DRB, users may navigate the hierarchy to retrieve a file for editing, view a file as read-only, submit new or updated files, request that a file be reviewed by another user, update a file's metadata information, including export control information, and search for files meeting specific criteria. The e-DRB is a complete solution that meets ISO-9001 requirements.

For example, an e-DRB may contain information pertaining to design calculations for a generator. The e-DRB may store manufacturing information as well as data that is not generally part of the article's model and/or drawing structure. That is, the e-DRB optionally stores drafting and/or design drawings, and may replace hardcopy design specification books throughout a product's life cycle. Test data used as input during various stages of design analysis may be stored in the e-DRB. The exact input files used during each phase of design analysis may be kept in an e-DRB. Whereas, often input data is not retained in hardcopy because it may be too voluminous to store and maintain. Any type of file may be stored in the e-DRB, including design memos, test data, design review minutes, design analysis output files and the like.

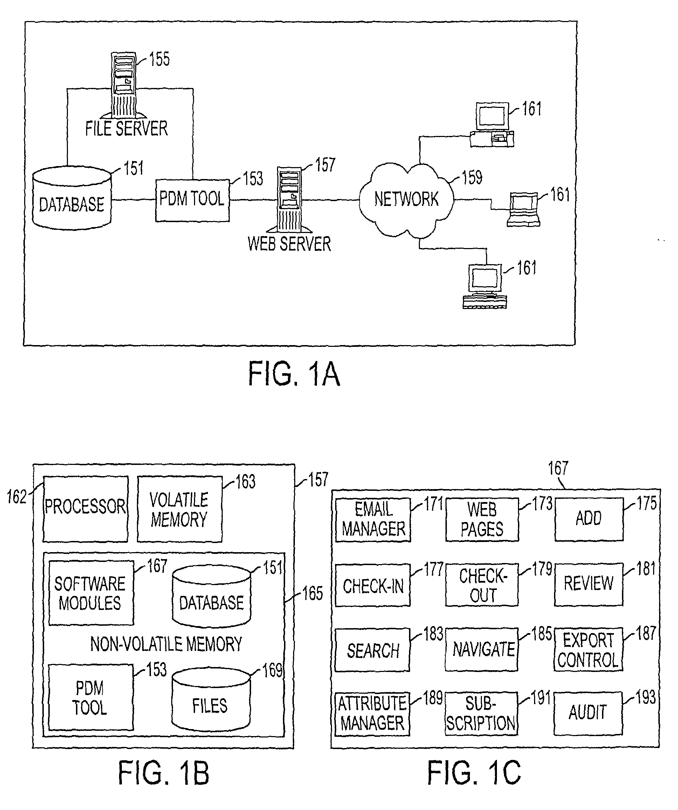

With reference to Fig. 1A, an e-DRB may be implemented as a network accessible tool consisting of a set of software modules operating in conjunction with a database and a product data management tool. The software modules define the content and functionality of the user-interface, which may be implemented through a plurality of web pages. There is an object-oriented database 151, such as may be provided by Oracle Corporation in Redwood Shores, California. The database is used to store metadata and attribute information, as well as to store an index of files used by the system. The files used by the system are stored in a file server 155. There is a product data management (PDM) tool 153 that provides access to the database and adds general workflow, life-cycle, and control functionality to the database. A PDM tool which may be used is e-Matrix, commercially available from Matrix One Corporation located in Chelmsford, Massachusetts.

The PDM tool controls access to the database 151 by acting as middleware between the software modules stored in a web server 157 and the database. The PDM tool 153 also may retrieve files from the file server 155 upon a proper request by a user, as communicated through the software modules.

The web server 157 is connected to a network 159, through which users using a standard web browser stored on one or more computers 161 can access web pages stored on the web server. The web pages are defined by the software modules. The network may be a global computer network such as the Internet, a LAN or WAN limited to users within an organization, such as a corporate intranet, extranet, or any other network through which users can communicate. In this manner, the e-DRB may facilitate communication of engineering design information across a small or large audience, as required by an organization's needs. In some embodiments, the e-DRB may reside behind firewalls to enhance data security. The e-DRB may be implemented using Java Server Pages such that a user does not need to download any specialized software to his or her local computer system in order to access the e-DRB.

In another embodiment, shown in Fig. 1B, a single web server 157 may perform all of the e-DRB functions. There is a processor 162, volatile memory 163, e.g. RAM, and non-volatile memory 165, e.g., a hard disk drive, CD-ROM, DVD-ROM, optical storage, or the like. The non-volatile memory comprises the database 151, PDM tool 153, and software modules 167, as well as files 169, which in the previous embodiment were stored in the separate file server 155. With reference to Fig. 1C, the software modules 167 may include an email manager module 171, web pages module 173, add module 175, check-in module 177, check-out module 179, review module 181, search module 183, navigate module 185, export control module 187, attribute manager module 189, subscription module 191, and audit module 193. Each module provides the necessary logic to perform specified functions, as described below. Multiple modules may interact to provide a user interface with specified functionality. That is, the web pages module 173 may store template information that is constant from one web-page interface to another, as well as specific web-pages that are used for each function. For instance, the web pages module may store a web page comprising a form for user input of metadata to be associated with a file. Upon receiving the input from the user, the data may be sent to the attribute manager module which would further communicate the information to the PDM tool and/or database for updating. Likewise, the web page module may store a web page comprising a form for user input of criteria for which files are searched. Upon receiving the user input, the criteria data may be sent to the search module to perform the search according to the user-provided criteria. The search module may then pass any search results data back to the web pages module for display in a web page to the user.

In one embodiment of the invention, the software modules have been implemented using Java Server Page (JSP) technology. Other software technologies and programming languages may equally well provide the same functionality.

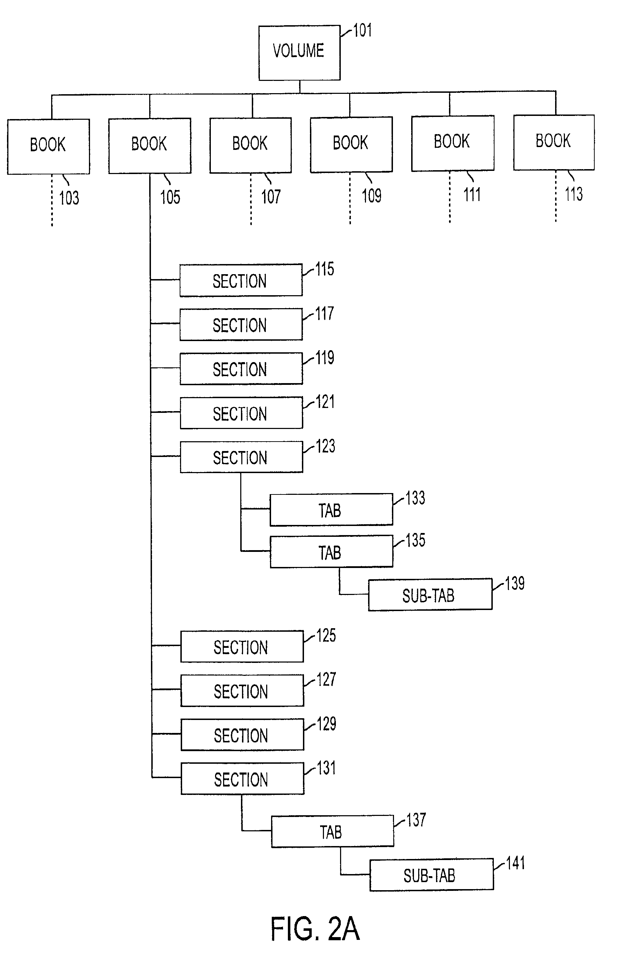

With reference to Fig. 2A, the engineering design information is organized in a hierarchical format within the e-DRB. At the top level is a volume 101. Each volume may be assigned to an organization within a larger enterprise-wide group. Within each volume there are at successively lower levels in the hierarchy including books, sections, tabs, and sub-tabs. Volume 101 is comprised of books 103-113 at the second level. Further levels are shown for book 105, where sections 115-131 are in the third level. At the fourth level, tabs 133-135 are children of section 123, and tab 137 is a child of section 131. At the fifth level, sub-tab 139 is a child of tab 135, and sub-tab 141 is a child of tab 137. Similar sections, tabs, and sub-tabs (not shown) may exist for Books 103, 107-113. In some embodiments of the invention, more or fewer levels in the hierarchy may be used.

In one embodiment of the invention the files may physically be stored in the hierarchical format using directory and subdirectory capabilities of the file server. In another embodiment, the file server stores the files according to its own criteria, and the database 151 maintains an index of the hierarchical structure.

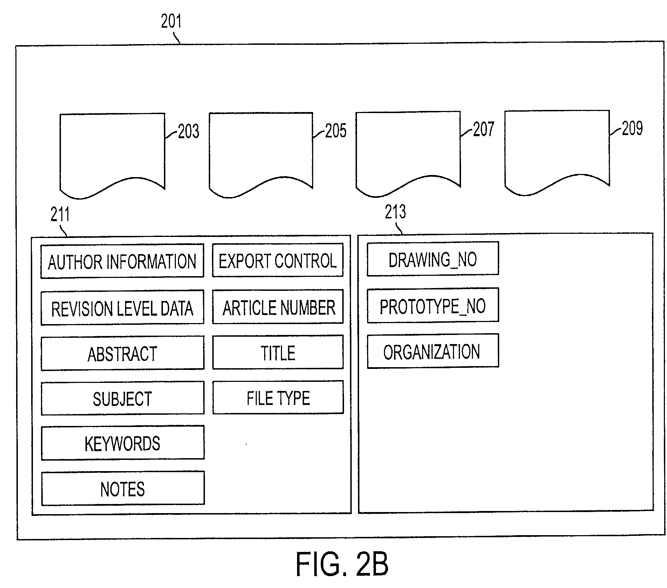

With reference to Fig. 2B, a unit of document storage in the e-DRB is referred to as an article. An article 201 may consist of one or more electronic files 203-209. Any electronic file may be stored in an article. For instance, WORD, EXCEL, and POWERPOINT documents, .PDF files, ASCII files, postscript files, image files (e.g., JPEG, .GIF, .TIF), email messages, HTML files, and the like. The files generally should bear a logical relationship to one another. However, this is not required. For instance, a user might assemble a set of notes for a lecture or a presentation to a particular group. The user may use WORD, EXCEL, POWERPOINT, JPEG and other types of files to assemble the final product. The overall article may be titled "Lecture Notes" or "Sales Presentation" or the like. The individual files would be of the types listed previously, and would be included within the same article. The grouped files are treated as one unit for purposes of control and revision and may be associated with a common set of one or more metadata fields 211. Articles may also contain one or more attributes 213. Articles may be stored at any level of the hierarchy below the top-level, i.e., any level below the volume level. The top level of the hierarchy generally contains only books.

Metadata 211 corresponding to each article is maintained with each revision of each article. Metadata fields contain information about the article, allowing the system to associate data about the articles in the e-DRB with each of the articles themselves. Metadata generally includes information such as the author, title, revision level, subject, abstract, keywords, date submitted, date reviewed, the reviewer, and the like. More or fewer metadata fields may be used. Other user-defined metadata, referred to as attributes, may be used as discussed below.

In some embodiments, articles are linked to other business tools, such as scheduling tools, drawing retrieval tools, or systems that provide test data and reliability data, using a metadata or attribute field.

Optionally, articles and books may be tagged with one or more attributes 213, as defined by the user community. Attributes are a type of metadata provided to allow customization of each e-DRB to meet the users' and/or organizations' needs. For instance, one may define an attribute named "Organization" that is intended to associate an article with a specific portion of the organization. When the article is submitted, the author would "tag" the article with the Organization attribute by assigning a value, such as Engineering, Marketing, Manufacturing, Sales, or the like. Another tag may be "Drawing No.," which may be used to hold the drawing number of a part associated with the article. Attributes help enhance searching capabilities by allowing users the ability to search for articles that contain attributes with specific values. These attributes also allow customization to differentiate one e-DRB volume (e.g., Generator) from another (e.g., Steam Turbine).

Because the list of attributes defined by users of a volume through a period of years cannot be predicted, each e-DRB is able to adapt to future needs using attributes and metadata. Similarly, the attributes also provide a means for the e-DRB to link to other business systems, such as an electronic bill of material (EBOM). It is possible to tag an article with an attribute such as "Drawing No." and assign the value "123E456." The PDM software may then link the article in the e-DRB to the other information in the EBOM through the common drawing number. In another example, a legal organization may organize its records by client, by location, by topic, chronologically, or the like. PDM software may allow the legal organization to separately link all of the records for a given client spanning over a number of years. It could then also link all of the records dealing with a specific area of law spanning many clients. In a design & manufacturing operation, there are numerous systems that hold decades of legacy data. Finding new ways to link these systems, using PDM software, offers tremendous productivity and profit opportunities.

Metadata regarding the author and revision level may be maintained with each revision of an article. That is, each time an article is updated, the author information is updated with the name of the user making the revision and a new revision level.

In one embodiment, the e-DRB performs article revision control by requiring that only the article owner can revise an article. The owner of an article is, by default, the user who first submitted the article. In another embodiment, any user can revise any article. If an author wishes to revise an article, he or she may be required to first check the article out. After checking out an article the user can change it, and check back in the modified article to the e-DRB. This means that the article is assigned to the user for editing, and other users are locked out from performing updates to or viewing the article. After the user finishes his or her revisions, the article is checked back in with updated author information and a new revision number. Only those articles previously checked-out for revision by a user can be checked back in by that user.

Each article has a version level, or revision level, that is one level higher than that of its predecessor, e.g., version C follows version B. This does not apply to articles that are subject to review but have not been approved yet, as articles still under review may be revised to correct content and grammar because they have not been accepted by a reviewer. The review feature is described in more detail below.

The e-DRB also records each article revision's submission date and time. This functionality supports ISO-9001 document control requirements and allows a document's history, including its possession history, to be easily traced and reviewed. It may also serve as evidence to establish a legally recognized sequence of events or a priority of invention.

Access to an e-DRB is restricted by assigning a username and passcode to each user. In addition, each user is assigned an access level. The user's access level determines those functions within the e-DRB the user may perform, and which articles, volumes, books, etc. the user may access. The lowest level user may have permission only to read articles within a volume, or even only within selected subgroups within a volume. A second group of users primarily only retrieve and submit articles. A third group of users are allowed to define the hierarchical storage structure within a volume. This third group of users are said to have modeling responsibility, and are responsible for adding or deleting books and performing other maintenance functions. There may also be a fourth group of users with administrative, or gatekeeper, responsibilities. This fourth group controls which users have access to the e-DRB and assigns various levels of access privileges to each user. Other access levels may also be used to meet an organization's needs.

Users with modeling privileges are responsible for defining the hierarchy structure, including adding new books, defining book structures, deleting articles, moving articles, defining standard attributes, and copying a book structure from one book to another. This division of responsibilities minimizes unstructured storage common to many file servers and enhances the retrieval of information by imposing order in the system.

In a preferred embodiment, the book hierarchy within an e-DRB volume should be designed to accomplish three principal goals: 1) organize the articles in a form understandable to users, i.e., the hierarchy should match users' expectations; 2) enhance the ability to search and retrieve articles by making the hierarchy easy for users to navigate, and; 3) organize articles in a manner that they are more easily linked to other enterprise-wide business tools, e.g. Electronic Bills of Material, the hierarchy of drawings, subassemblies, and assemblies that comprise the final product.

With the above goals in mind, users may construct the hierarchy of a book in a manner that will most likely match other data structures in their organization. The e-DRB's flexibility allows users to adapt the e-DRB to new business systems as they are developed. For instance, a company may produce ten unique products, and may have ten separate e-DRBs or ten volumes within one e-DRB. At a more detailed level, the organization of the contents of each e-DRB may be organized to match the hierarchy of parts and assemblies in each product, or to match the order in which parts are designed or manufactured. A wide variety of e-DRB hierarchies may easily be envisioned in this manner.

A book template may be created based on a hierarchy within an existing book, i.e., a template containing only the hierarchy structure and not the articles contained therein. Book templates are used to allow authorized users to copy the hierarchical structure of one book for use in another book. This is useful when users determine that a hierarchy within one book is particularly well suited to their work in another book. For instance, book templates may correspond to specific products available for sale and the sections within the template could correspond to specifications, drawings, tests, and service information. Each time a product is sold, a copy of that book template could be made to hold the information about that sale. This functionality permits one to copy the structure from one book to other books without requiring a user to laboriously recreate the structure at each instance of use.

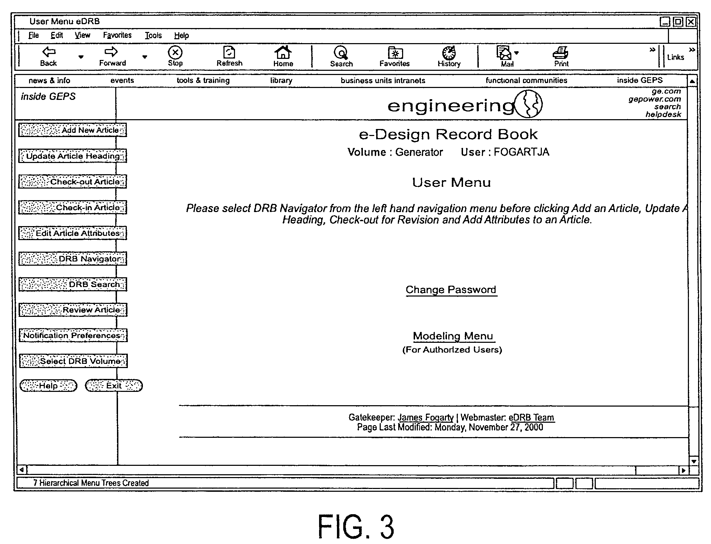

An e-DRB according to an embodiment of the invention will now be described with reference to Figs. 3-20. Each user interface screen generally contains hyperlinked text that allows a user to perform an action or view an article in the e-DRB. As used herein, hyperlinked text, selectable buttons, and selectable icons or graphics on a web page are interchangeable, and are collectively referred to by the term "icon." The functional buttons along the left side of most of the screens in the e-DRB provide immediate access to all of the functions available to most users.

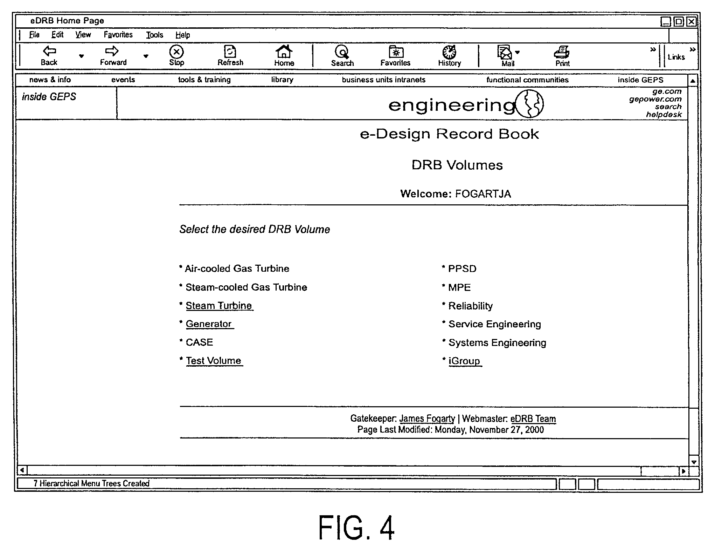

After logging in to an e-DRB system, a user is presented a DRB Volumes screen, such as that shown in Fig. 4. Before performing any function pertaining to an article, the user must generally navigate below the volume level of an e-DRB, by selecting a volume. This is because articles are generally not stored at the volume level. Upon selecting a volume, such as Generator, the User Menu, as shown in Fig. 3, provides confirmation of the user name and the opportunity to change his or her password, perform modeling functions when the user has authority to do so, or access a volume within the e-DRB.

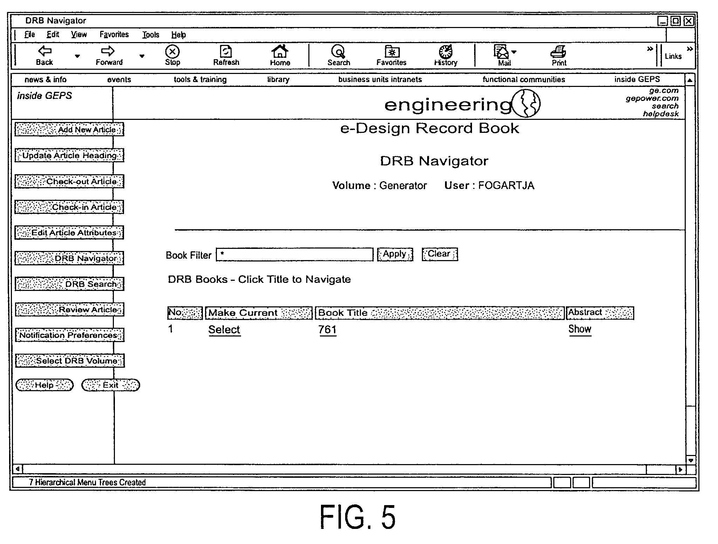

From the e-DRB Volume screen, a user may select a volume in which to work. Only those volumes to which the user has access may be available for the user to select, depending on the user's access level. Upon selecting a volume, for instance the Generator volume, the user is presented with the DRB user menu, as shown in Fig, 3. The user may elect to "navigate" to a location within the e-DRB by selecting the "DRB Navigator" function, causing a DRB Navigator screen, shown in Fig. 5, to appear. The DRB Navigator screen allows the user to further select a book within the volume, at which point the user may begin to perform actions using articles.

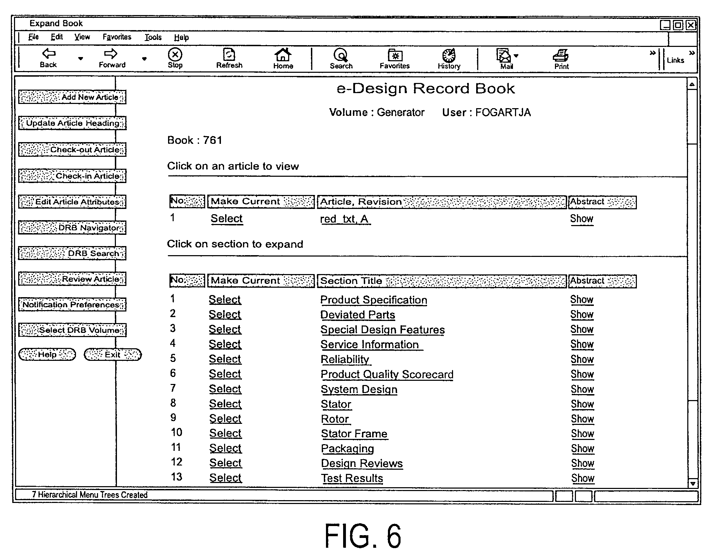

When the user clicks on the title of a book from the DRB Navigator screen, for instance book 761, the user is presented with a display of the contents of the book on a lower level navigation screen, shown in Fig. 6. At each successive level in the hierarchy the navigator function may show lower levels yet to be expanded and possibly articles at that level. From the user's point of view, clicking the title of an DRB "container" (book, section, tab, etc.) opens the container for viewing. Likewise, clicking the title of an article opens that article for viewing its metadata and any attached files. The user may elect to "Select" an article or container to indicate which part of the e-DRB upon which he or she wishes to perform actions. From the eDRB User Menu, as from other screens where at least a book has been selected, the user may add an article, update an article, check out an article, check in an article, edit an article's attributes, or review an article. The user may also re-launch the DRB Navigator, perform a DRB search, set notification preferences, or select a new DRB volume by using the corresponding icon on the screen.

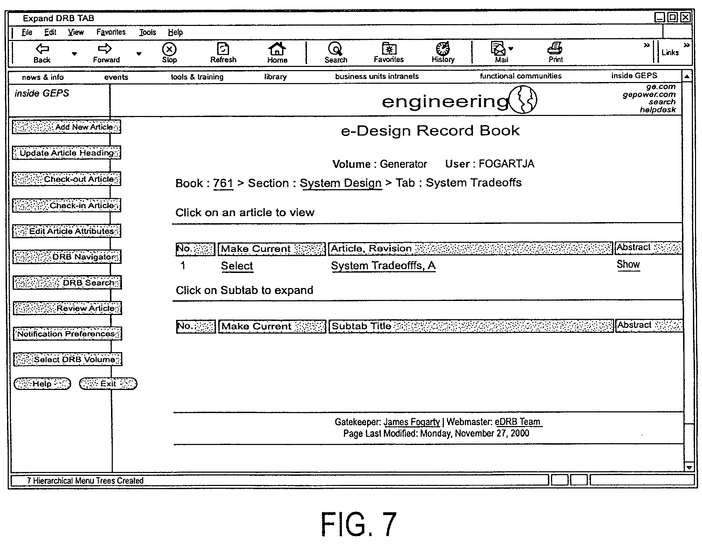

In addition, from the e-DRB User Menu, the user may view available articles, view the abstract of available articles, or further navigate the hierarchy by clicking on a sub-level of the hierarchy. On some screens the user may also navigate back up the hierarchy by activating an icon corresponding to linearly higher levels of the hierarchy, as shown in Fig. 7. Fig. 7 shows the DRB Navigator after a user has navigated through the hierarchy levels Book: 761, Section: System Design, and Tab: System Tradeoffs. In Fig. 7, the user may navigate up the hierarchy by clicking the corresponding icon for the parent Book or Section, or continue navigating down the hierarchy by clicking on an available Sub-tab (none shown). From the screen shown in Fig. 7, the user may view the articles associated with the tab System Tradeoffs.

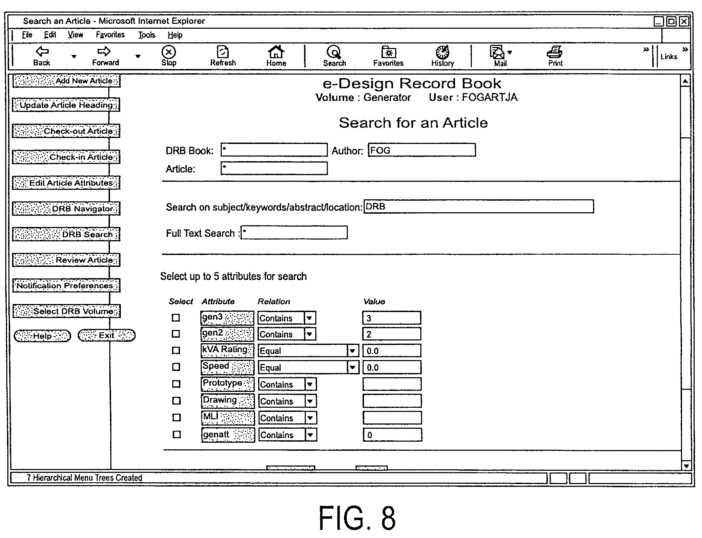

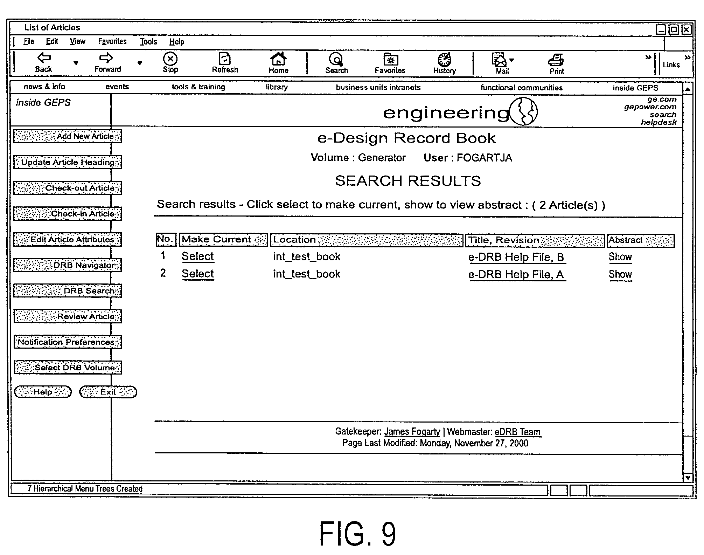

When a user clicks on the DRB Search icon on an e-DRB screen, the user is presented a search screen as shown in Fig. 8. On the search screen, a user may enter search criteria to find one or more articles matching the criteria. The search criteria may include metadata, including attributes, associated with an article, or the search criteria may be text contained within an article's files. Optionally, the number of attributes that may be used for the search may be limited. Upon clicking the appropriate button, the search is performed and the user is presented the results on a Search Results screen, as shown in Fig. 9.

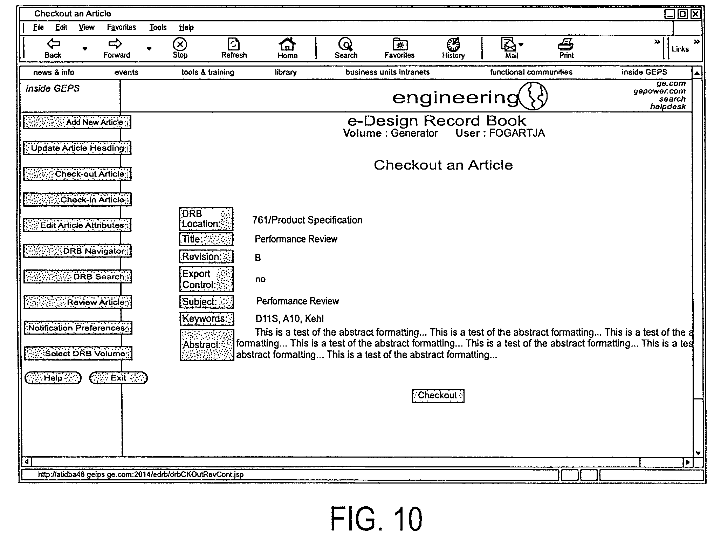

When a user clicks on the Check-out Article icon on a e-DRB screen, the user is presented a Checkout screen, shown in Fig. 10. On the Checkout screen the user may view pertinent details regarding an article. For instance, attributes and metadata, including the title, subject, abstract, and other useful information, may be displayed to the user. The user may click an icon or button to check the article out to the user. If the user does not have authority to check the article out, the user will be presented a screen informing the user that the article is unavailable for checkout to that user. If the user does have authority to check the article out, the user may be sent an email with the files in the article sent as attachments to the email. In some embodiments, the user is shown a screen with an icon for each file, where each icon is hyperlinked to a file for download by the user.

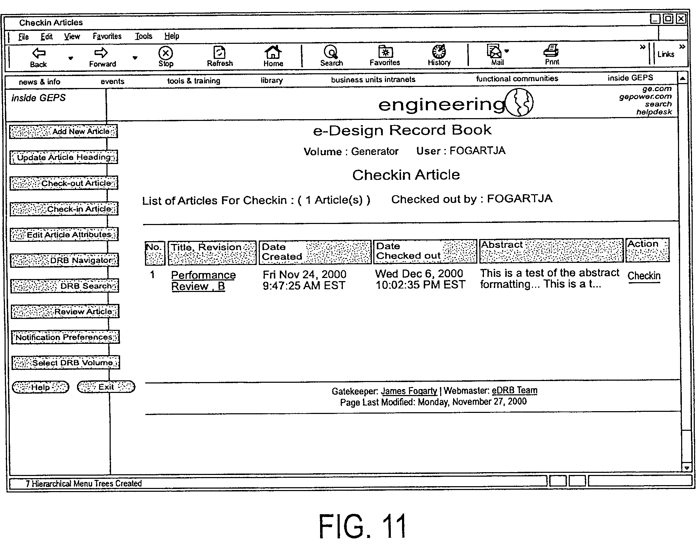

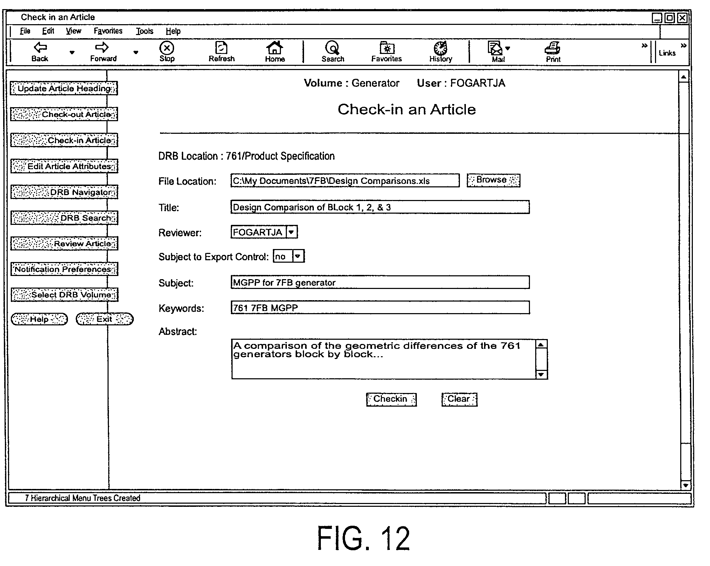

Whenever a user clicks on the Check-in Article icon on an e-DRB screen, the user is presented a Check-in screen, shown in Fig. 11. On the Check-in screen the user is presented a list of each article that is currently checked out to the user. The title of the article is hyperlinked to attributes and metadata associated with that article, such that the user can confirm the article identity where there are many similar articles checked out by that user. The user may click on the icon Checkin to check the article back in to the e-DRB. In one embodiment, the user is presented a screen through which the user may upload the files contained in the article, as shown in Fig. 12. Using the File Check-in screen of Fig. 12, a user may individually upload those files updated by the user, along with predetermined attribute and metadata information. In another embodiment, the user may email the files back to the e-DRB to check the article back in.

Whenever a user submits an article, he or she may be presented with a set of reviewers from which he or she must select for that article. The selected reviewer must approve the article before it is available for general viewing by other users. The reviewer may receive an e-mail or similar communication when the article is submitted that the reviewer is requested to approve. The user may also receive an e-mail notifying him or her of the review results. If the reviewer rejects the article, the author may continue to revise it, and resubmit the article for subsequent review. After an article is reviewed and approved it is entered into the revision control system and all subsequent changes require a new revision level. Not every article may be required to be reviewed. The choice of articles to review is a policy decision that may be made within each organization. It is possible, and expected, that two organizations using an e-DRB system will have separate policies in this regard. Optionally, reviewing is not required, and all articles may be automatically accepted into the e-DRB.

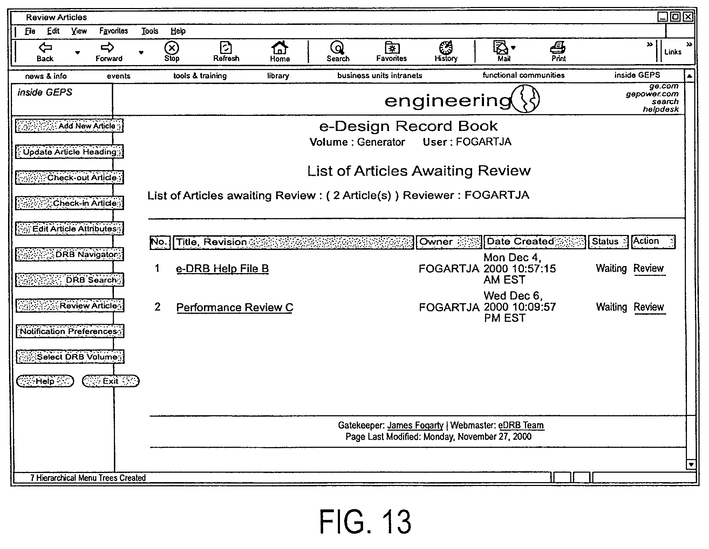

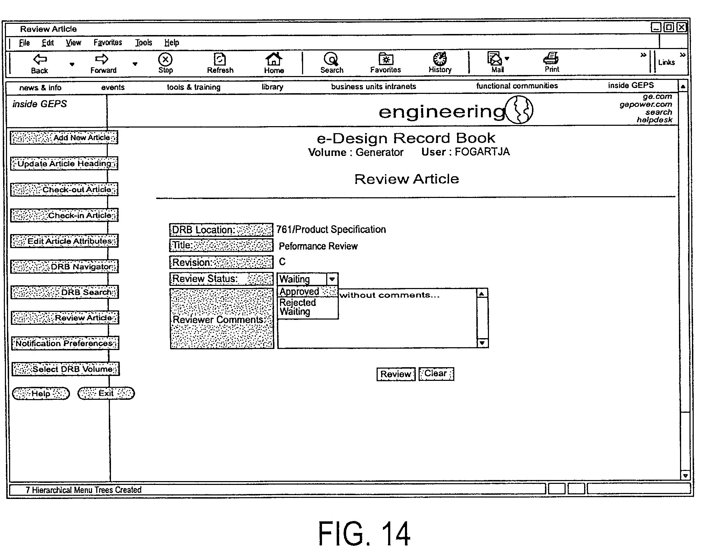

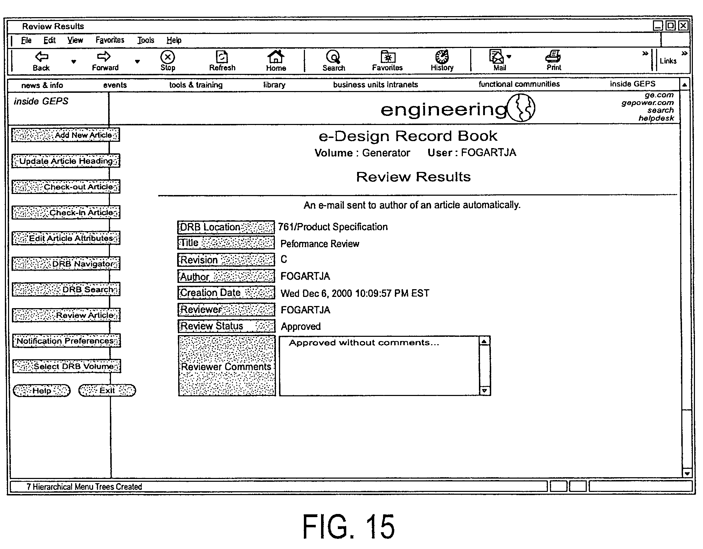

When a user has reviewer authority, the user may find out those articles awaiting their review by clicking on the Review Article icon on an e-DRB screen. Upon clicking this icon, the user is presented a list of article awaiting review, shown in Fig. 13. The user may click on the hyperlinked title of the article to receive attribute and metadata information corresponding to the article, or the user may click Review next to an article to review the article. Upon clicking the Review icon, the user is presented a Review Article screen, shown in Fig. 14. On the Review Article screen, a user may select the appropriate Review Status for the article, and enter any comments for the user who submitted the article. After submitting the review by clicking an appropriate icon, the reviewer is shown a Review Results screen, shown in Fig. 15. An email containing a copy of the review results may be sent to the user who submitted the article.

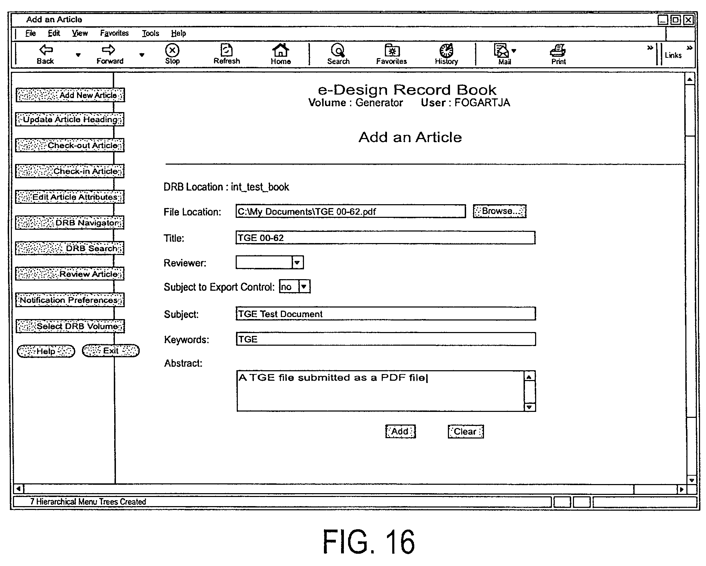

When a user wants to add an article, the user generally may select the Add New Article icon from an e-DRB screen. The user may be presented an Add Article screen, shown in Fig. 16. On this screen the user may enter information regarding the article, including where the initial file to be added to the article is located and pertinent attributes and metadata corresponding to the article. Upon selecting the Add icon the system automatically uploads the selected file and its corresponding attributes and metadata entered by the user. After a user adds a file to an article, only a user with modeling privileges may delete that file and/or article. If the user who submitted the file does not have modeling privileges, that user cannot delete the file or the article containing that file. The newly submitted file and/or article may be required to go through the review process, above.

After a user checks in an article as shown in Fig. 11 or adds an article as shown in Fig. 16, a copy of the article is moved to a document file server controlled by the PDM tool. Even if the author retains a copy of the submitted article on his or her own computer, the official copy for use by the e-DRB is the copy on the file server. The author no longer has the official copy of the article. By placing the article on a restricted server, the e-DRB ensures that a copy of an article a user retrieves from the e-DRB is the latest version.

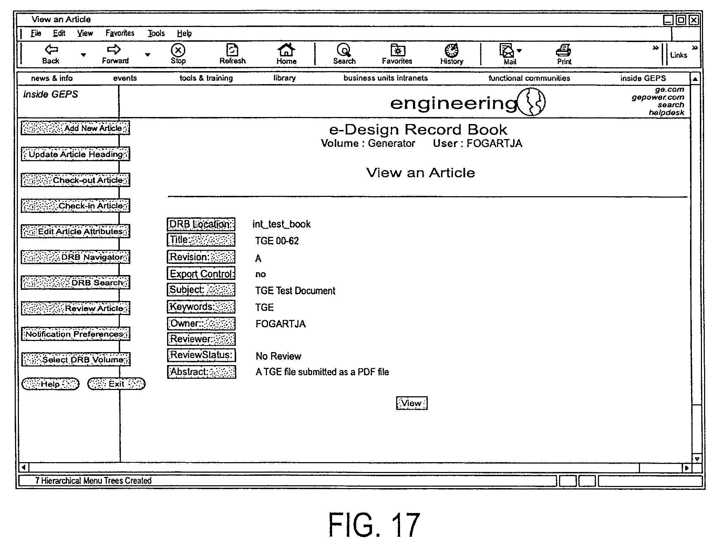

When a user wants to view an article, the user generally may select the hyperlinked article title from an e-DRB screen. Upon selecting an article, the user may be presented a View Article screen, shown in Fig. 17. Through the View Article screen the user is presented a summary of the attributes and metadata associated with the article. By clicking a View icon, the user may view the contents of the file or files contained in the article, using known means. For instance, if the file is a .PDF file, Adobe® Acrobat Reader® may be automatically launched on the user's computer to view the file. This View Article function is distinguished from a paper-based system in that a user may obtain a copy from the e-DRB without actually possessing or disturbing the controlled copy. In a paper-based system, one must necessarily possess the controlled copy and remove it from the controlled environment to make copies in a conventional copier.

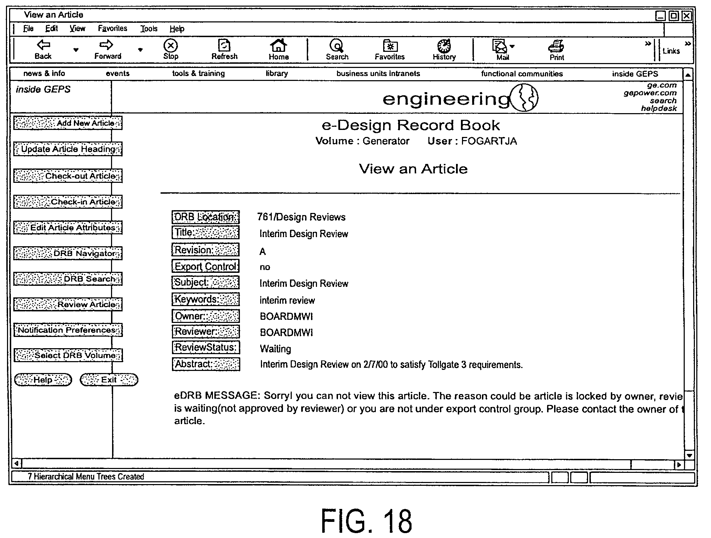

However, certain articles may be subject to export control restrictions defined by the U.S. Department of Commerce (DOC), and as such, specified users may not be allowed to view the contents of those articles. Metadata for an article includes a flag indicating that the article is or is not subject to export control. When this flag is set, e-DRB users who are foreign nationals may not view the information in the article, as shown in Fig. 18. Similarly, it is possible to mark entire books, sections and so forth as "Export Controlled" so that all of the contents below the point in the hierarchy flagged as restricted are also export controlled. By flagging books, sections, etc. as export controlled, individual users who submit articles to the e-DRB are not required to remember to flag individual articles. Each article may inherit the export control property by virtue of its location in the e-DRB. In this manner, the likelihood that foreign nationals might accidentally view export-controlled information is significantly reduced. It is also possible to base the export control not only on the export control flag, but on the user's nationality. For instance, where users' nationalities are known, users from countries with which the United States has reciprocal export control agreements may be able to view the export controlled articles, while users from other countries may not be able to view those articles.

In one embodiment, each user has a View Export Control flag with which they are associated. Articles, books, tabs, etc., collectively referred to as a unit of storage, each are associated with an Export Control flag. When a unit of storage's export control flag is NO, users may view that unit of storage regardless of their own view export control flag's status. However, when a unit of storage's export control flag is YES, only those users whose view export control flag is YES may view that unit of storage. Those users whose view export control flag is NO will be restricted from viewing that article of storage and it contents and sub-levels.

Users may also be restricted from viewing an article when the article is locked by the owner because it has been checked out, or the article is awaiting review. In such instances, the user will be informed upon selecting the View icon, as shown in Fig. 18.

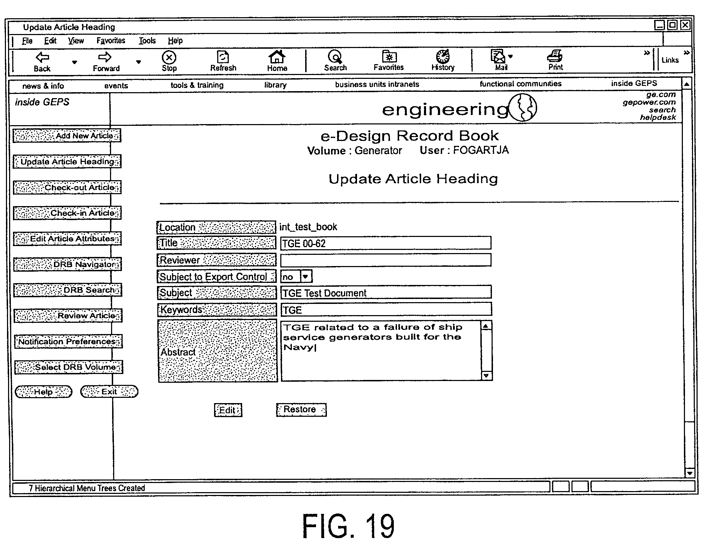

A user may update an article's metadata by clicking the Update Article Heading icon on an e-DRB screen. The user may be presented a screen through which the user may enter article metadata information, as shown in Fig. 19. The user may select an Edit icon to submit the changes, or a Restore icon to leave the article metadata information unchanged.

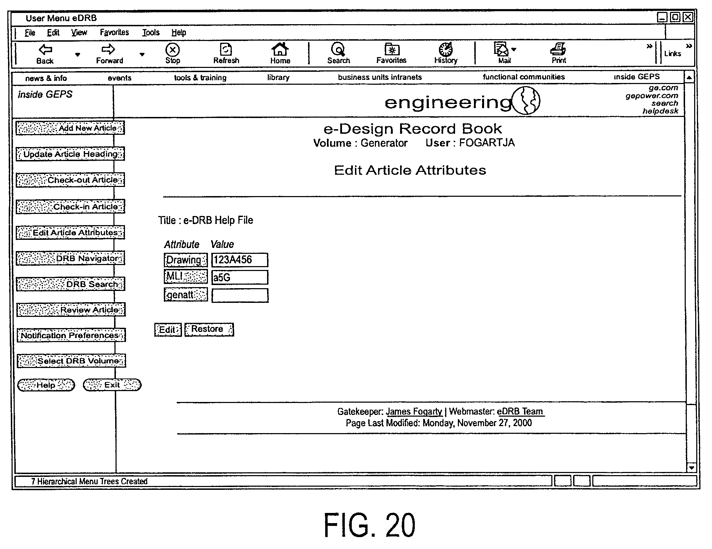

Similarly, a user may update an article's attributes by clicking the Edit Article Attributes icon on an e-DRB screen. The user may be presented a screen through which the user may enter article attribute information, as shown in Fig. 20. The user may select an Edit icon to submit the changes, or a Restore icon to leave the article attribute information unchanged.

By clicking on the Notification Preferences on an e-DRB screen, the user is presented a Notification Preferences screen (not shown) through which the user may define or edit his or her subscription profile. That is, a user can ask to be notified when any activity takes place within the e-DRB that matches his or her specified criteria. Notification may be based on the storage hierarchy, or on any attribute or metadata field. For instance, a user can ask to be notified by e-mail, pager, instant message, or the like, when a new article is submitted pertaining to "Drawing No. = 123E456". Likewise, a user may request to be notified when an article is added or amended in a specified subgroup, e.g., book number 761. To subscribe to notification of e-DRB updates, in addition to the Notification Preferences screen, a user may send an email to the e-DRB with the criteria under which the user would like to be notified. The user may unsubscribe in the same manner.

As previously stated, the owner of an article is generally the initial author. However, circumstances may dictate that another person must revise the article, e.g., because the original author has changed job responsibilities or retired. Change in article ownership is accomplished through a maintenance function (not shown) through which those users with modeling privileges may designate a new owner of an article.

The e-DRB system may use email with the capability for attachments to communicate engineering design information to and from the e-DRB. A file to be submitted may be attached to an email. The body of the email may include any required metadata and attribute information. Articles may be rejected if they are incomplete when submitted. For instance, if the article does not contain sufficient information and/or metadata to place the article in the appropriate location in the hierarchy, the user submitting the article may be notified that the article was rejected and that additional information is required. Similarly, a user may request to check out a file via email, and the file will be sent to the user via return email with the file attached.

Each e-DRB may track the usage of articles (who requested it, when, etc.) within the e-DRB. This information is recorded and maintained for audit purposes. When an article is deleted, the article is maintained in an archive section of the e-DRB (not shown). All articles are also archived when they are superceded. An article is superceded by being checked out, modified, and checked back in and accepted by a review when required.

The e-DRB may provide functions to audit the contents of the e-DRB for a given product. Auditing allows a user to expand the directory structure to view the organization of the e-DRB. Auditing also provides reports showing which articles are present in the e-DRB and when each article has been retrieved and by whom. The occurrence of an audit may itself be recorded and stored.

In some embodiments, documents may be automatically forwarded to an e-DRB upon the occurrence of a specified event. For instance, if a new version of a product is produced, a copy of the design file(s) may automatically be sent to the e-DRB for that product, removing the need for an employee to physically maintain known design record books using paper copies. Another example is where output files generated by testing and analysis programs are automatically forwarded and stored in the e-DRB with the appropriate metadata information.

An e-DRB as described herein may be used whenever document management and/or ISO-9001 control are needed or useful. An e-DRB easily serves as a document storage system for engineering information. However, e-DRB's may also easily be used in non-engineering applications. Because user interface screens may easily be customized in appearance without changing the underlying functionality of the system, e-DRBs may be adapted to an infinite number of applications and environments.

For the sake of good order, various features of the invention are set out in the following clauses:-
1. An electronic design record book comprising:
   a file server 155;
   a database 151 for storing metadata 211 and hierarchy information;
   a computer program 153 for sending and requesting documents to and from the file server 155;
   a web server 157 comprising:
      a processor 162;
      a volatile memory 163; and
      a non-volatile memory 165 for storing computer readable instructions, wherein when the computer readable instructions are executed by the processor 162, the server 157 performs the steps:
      receiving a file submitted by a first user;
      associating metadata 211 with the received file;
      organizing the received file in a hierarchical data structure; and
      presenting the received file to one of the first user and a second user;
2. The electronic design record book of clause 1, wherein metadata 211 comprises user-defined attributes 213.
3. The electronic design record book of clause 1, wherein metadata 211 comprises an export control flag, such that when the flag is a predetermined value a predetermined set of users cannot view the file with which the flag is associated.
4. The electronic design record book of clause 1, wherein the server 157 performs the steps of:
   reviewing the file submitted by the first user to determine whether the file is accepted; and
   when the submitted file is not accepted, prohibiting a second user from viewing the file.
5. The electronic design record book of clause 1, wherein the server 157 performs the steps of:
   notifying one of the first user, the second user, and a third user, when metadata associated with the received file matches a predetermined set of criteria.
6. An electronic record comprising:
   a pointer to at least one data file; and
   metadata 211 comprising author information, revision information, and export control information.
7. The electronic record of clause 6, wherein metadata 211 further comprises at least one user-defined attribute 213.
8. The electronic record of clause 6, wherein metadata 211 further comprises at least one of the group of abstract information, subject information, keyword information, and title information.
9. A method of maintaining revisable records and tracking changes to the records, comprising the steps of:
   receiving a file submitted by a first user;
   associating metadata with the received file;
   organizing the received file in a hierarchical data structure; and
   presenting the accepted file to one of the first user and a second user;
10. The method of clause 9, further comprising the steps of:
   reviewing the file submitted by the first user to determine whether the file is accepted; and
   when the submitted file is not accepted, prohibiting the second user from viewing the file.
11. The method of clause 9, wherein metadata comprises an export control flag, and said method further comprises the step:
   prohibiting a predetermined set of users from viewing the file when the flag is a predetermined value.
12. The method of clause 9, further comprising the step of:
   notifying one of the first user, the second user, and a third user, when metadata associated with the received file matches a predetermined set of criteria.
13. A document management system for receiving, storing and tracking engineering design documents, each document comprising metadata and positioned in a hierarchical data structure, said system comprising:
   a file server 169 for storing documents;
   a database 151 operatively coupled to said file server 169 for storing metadata information 211 and hierarchy information associated with each document;
   a data management tool 153 operatively coupled to said file server and said database for receiving and processing documents and tracking revisions made to said documents;
   a user interface comprising a computer for enabling a user to review, create, or revise documents in said data management tool; and
   a software module 167 coupled to said data management tool 153 comprising user criteria and document access criteria.
14. The system of clause 13, wherein the hierarchical levels are organized in volumes, books, sections, tabs, and sub-tabs.
15. The system of clause 14, wherein said user criteria is matched to a hierarchical level.
16. The system of clause 14, wherein said document access criteria is matched to a hierarchical level.
17. The system of clause 13, wherein said user criteria and document access criteria are configured to allow read-only access to a predetermined set of documents.
18. The system of clause 13, wherein said user criteria and document access criteria are configured to allow a user to create documents.
19. The system of clause 13, wherein said user criteria and document access criteria are configured to allow a first user to review a document submitted by a second user before the system accepts the submitted document.
20. The system of clause 13, wherein said user criteria and document access criteria are configured to prohibit a user from viewing a document when the document access criteria contains an export control flag and the user criteria contains predetermined user nationality information.
21. The system of clause 13, wherein the user interface comprises a plurality of web pages stored on a web server 157, wherein said web pages are accessible over a network.
22. The system of clause 21, wherein the network is the Internet.
23. The system of clause 21, wherein the network is one of the group of an intranet, extranet, LAN, or WAN.
24. A process of managing the receiving, storing and tracking of engineering design documents comprising metadata information, said process comprising the steps of:
   storing documents in a file server;
   storing metadata information associated with each document in a database;
   storing hierarchy information associated with each document in the database;
   receiving, processing, and tracking revisions to the documents in a data management tool operatively coupled to the file server and the database;
   submitting new documents through a user interface coupled to the data management tool; and
   processing user criteria and document metadata information to enable or prevent access to any document.
25. The process of clause 24, further comprising the steps of:
   checking out a document, such that when the document is checked out, other users cannot view or revise the document; and
   checking in the document by submitting the document through the user interface.
26. The process of clause 24, further comprising the steps of:
   searching for documents based on metadata associated with each document.
27. The process of clause 24, further comprising the steps of:
   when a document is submitted, requesting that a user review the document before the document is accepted; and
   prohibiting a second user from viewing the document until the document has been accepted.
28. The process of clause 24, wherein metadata comprises an export control flag, and further comprising the steps of:
   prohibiting access to a predetermined set of users when the export control flag is a predetermined value.
29. A method of using a document management system, comprising the steps of:
   (i) submitting a new document to an electronic design record book (e-DRB) through a user interface, wherein each document is associated with metadata;
   (ii) checking out a previously submitted document from the e-DRB;
   (iii) checking in the document checked out in step (ii);
   (iv) reviewing a submitted document for acceptance into the e-DRB; and
   (v) prohibiting access by a first user to a checked in document that has not been accepted in step (iv).
30. The method of clause 29, further comprising the step of:
   (vi) searching documents based on metadata.
31. The method of clause 29, wherein metadata comprises an export control flag, and further comprising the step of:
   (vi) setting an export control flag to a predetermined value, such that access to the documents associated with the export control flag is prohibited to a set of predetermined users.

## Claims

1. An electronic design record book comprising:
a file server 155;
a database 151 for storing metadata 211 and hierarchy information;
a computer program 153 for sending and requesting documents to and from the file server 155;
a web server 157 comprising:
a processor 162;
a volatile memory 163; and
a non-volatile memory 165 for storing computer readable instructions, wherein when the computer readable instructions are executed by the processor 162, the server 157 performs the steps:
receiving a file submitted by a first user;
associating metadata 211 with the received file;
organizing the received file in a hierarchical data structure; and
presenting the received file to one of the first user and a second user;

2. The electronic design record book of claim 1, wherein metadata 211 comprises user-defined attributes 213.

3. The electronic design record book of claim 1, wherein metadata 211 comprises an export control flag, such that when the flag is a predetermined value a predetermined set of users cannot view the file with which the flag is associated.

4. An electronic record comprising:
a pointer to at least one data file; and
metadata 211 comprising author information, revision information, and export control information.

5. A method of maintaining revisable records and tracking changes to the records, comprising the steps of:
receiving a file submitted by a first user;
associating metadata with the received file;
organizing the received file in a hierarchical data structure; and
presenting the accepted file to one of the first user and a second user;

6. The method of claim 5, further comprising the steps of:
reviewing the file submitted by the first user to determine whether the file is accepted; and
when the submitted file is not accepted, prohibiting the second user from viewing the file.

7. The method of claim 5, further comprising the step of:
notifying one of the first user, the second user, and a third user, when metadata associated with the received file matches a predetermined set of criteria.

8. A document management system for receiving, storing and tracking engineering design documents, each document comprising metadata and positioned in a hierarchical data structure, said system comprising:
a file server 169 for storing documents;
a database 151 operatively coupled to said file server 169 for storing metadata information 211 and hierarchy information associated with each document;
a data management tool 153 operatively coupled to said file server and said database for receiving and processing documents and tracking revisions made to said documents;
a user interface comprising a computer for enabling a user to review, create, or revise documents in said data management tool; and
a software module 167 coupled to said data management tool 153 comprising user criteria and document access criteria.

9. A process of managing the receiving, storing and tracking of engineering design documents comprising metadata information, said process comprising the steps of:
storing documents in a file server;
storing metadata information associated with each document in a database;
storing hierarchy information associated with each document in the database;
receiving, processing, and tracking revisions to the documents in a data management tool operatively coupled to the file server and the database;
submitting new documents through a user interface coupled to the data management tool; and
processing user criteria and document metadata information to enable or prevent access to any document.

10. A method of using a document management system, comprising the steps of:
(i) submitting a new document to an electronic design record book (e-DRB) through a user interface, wherein each document is associated with metadata;
(ii) checking out a previously submitted document from the e-DRB;
(iii) checking in the document checked out in step (ii);
(iv) reviewing a submitted document for acceptance into the e-DRB; and
(v) prohibiting access by a first user to a checked in document that has not been accepted in step (iv).
